# EUROPEAN PATENT SPECIFICATION

(11) **EP 4 194 517 B1**
(45) Date of publication and mention of the grant of the patent: **27.11.2024**
(21) Application number: 22211382.1
(22) Date of filing: 05.12.2022
(51) Int. Cl.: C09D 11/107, C09D 11/38, D06P 5/00

(54) **AQUEOUS INKJET INK RESIN DISPERSION AND AQUEOUS INKJET INK**
WÄSSRIGE TINTENSTRAHLTINTENHARZDISPERSION UND WÄSSRIGE TINTENSTRAHLTINTE
DISPERSION AQUEUSE DE RÉSINE POUR JET D'ENCRE ET ENCRE AQUEUSE POUR JET D'ENCRE

(30) Priority: 13.12.2021 JP 2021201897
(43) Date of publication of application: 14.06.2023
(73) Proprietor: Konica Minolta, Inc., Tokyo 100-7015 (JP)
(72) Inventor: SHIRAISHI, Masaharu, Tokyo, 100-7015 (JP); NAKAMURA, Masaki, Tokyo, 100-7015 (JP)
(74) Representative: MFG Patentanwälte Meyer-Wildhagen Meggle-Freund Gerhard PartG mbB

(56) References cited:
- EP-A1- 3 473 447
- EP-A1- 3 998 164
- EP-A1- 4 095 209
- WO-A1-2021/006211
- WO-A1-2021/149548
- JP-A- 2018 119 027

## Description

### Background

### Technological Field

The present invention relates to an aqueous inkjet ink resin dispersion and an aqueous inkjet ink.

### Description of the Related art

As a textile printing method, so-called inkjet textile printing in which an image is formed on a fabric by an inkjet method is widely performed because, for example, dyeing can be performed in a short time, and production efficiency is high.

In inkjet textile printing, a dye ink or a pigment ink is used. As the dye ink, an aqueous ink containing a reactive dye is known. In the aqueous ink containing a reactive dye, since the reactive dye is dissolved in or reacts with fibers of a fabric, an image with high fixability can be obtained, but a step of washing away the dye that has not been dissolved or has not reacted is required. Use of a pigment ink has been studied from a viewpoint of omitting such a washing step.

As the pigment ink, an aqueous ink containing a pigment, resin particles (binder resin), a sulfonate-based anionic surfactant, and water is known (for example, JP 2019-163397 A). Since the pigment alone is less likely to be bonded to a fabric, the pigment ink is bonded to the fabric by inclusion of the binder resin therein as described above.

As a dispersion of resin particles used in an aqueous ink, an aqueous dispersion of resin particles formed of a polymer containing a structural unit derived from a polymerizable component having a vinyl group and a polyalkyleneoxy group and a structural unit derived from a polymerizable reactive emulsifier component is known (for example, JP 2020-33512 A). It is indicated that the polymerizable component having a vinyl group and a polyalkyleneoxy group functions as a nonionic reactive emulsifier and that the polymerizable reactive emulsifier component is a nonionic or anionic polymerizable reactive emulsifier.

The pigment ink containing such resin particles as described above is usually prepared by mixing an ink component containing a pigment (pigment dispersion liquid or the like) and an aqueous dispersion of resin particles. The aqueous dispersion of resin particles is prepared, for example, by an emulsion polymerization method.

However, the pigment ink containing resin particles obtained by the emulsion polymerization method may have low or insufficient dischargeability by an inkjet head even when the pigment ink exhibits favorable dispersibility in a storage state.

### Summary

The present invention has been made in view of the above problems, and an object thereof is to provide an aqueous inkjet ink resin dispersion and an aqueous inkjet ink excellent in dischargeability by inkjet.

To achieve the abovementioned object, according to an aspect of the present invention, an aqueous inkjet ink resin dispersion for textile printing reflecting one aspect of the present invention comprises resin particles and water, wherein
the resin particles contain a radical polymer containing a structural unit derived from a polymerizable compound represented by formula (1). 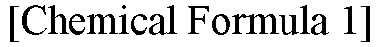 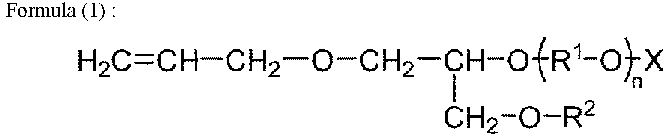 (In formula (1), R¹ represents an alkylene group having 1 to 10 carbon atoms,
n represents an integer of 1 to 100,
R² represents an alkyl group having 1 to 50 carbon atoms or an aryl group having 6 to 30 carbon atoms, and
X represents -SO₃M (M represents an alkali metal atom or NH₄)), wherein the radical polymer has a glass transition temperature of -35°C or lower, measured by differential scanning calorimetry rising rate of 10°C/min according to JIS K7121.

### Detailed Description of Embodiments

Hereinafter, one or more embodiments of the present invention will be described with reference to the drawings. However, the scope of the invention is not limited to the disclosed embodiments.

An emulsifier is physically adsorbed on surfaces of the resin particles prepared by the emulsion polymerization method as described above, and the resin particles thereby maintain dispersibility. An aqueous inkjet ink (hereinafter, also simply referred to as "ink") containing such resin particles may have low dischargeability by an inkjet head even when the aqueous inkjet ink exhibits favorable dispersibility in a normal storage state. A reason for this is not clear. However, it is considered that this is because high pressure is likely to be applied to the ink at the time of discharge by the inkjet head, some of emulsifier components adsorbed on the surfaces of the resin particles are easily removed due to this high pressure, and the resin particles are easily aggregated.

On the other hand, in the present invention, as the resin particles used in the ink, those obtained by emulsion polymerization using an anionic reactive emulsifier (polymerizable compound represented by formula (1)) having an allyl group as a polymerizable group and a polyoxyalkylene group are used. As a result, the dischargeability by the inkjet head can be improved.

A reason for this is not clear, but is presumed as follows.

The reactive emulsifier is incorporated into a molecular chain of a polymer constituting the resin particles during emulsion polymerization. As a result, even when a high pressure is applied to the ink, the reactive emulsifier is less likely to be removed from the resin particles, and therefore aggregation of the resin particles can be suppressed.

In addition, the reactive emulsifier has an allyl group as a polymerizable group, and therefore has a slower polymerization reaction rate than a component having a vinyl group as a polymerizable group (for example, a (meth)acrylate). As a result, after the polymerizable component having a vinyl group reacts first, the reactive emulsifier having an allyl group is easily polymerized, and therefore the reactive emulsifier is easily oriented on surfaces of the resin particles.

In addition, the reactive emulsifier oriented on surfaces of the resin particles has both an anionic group and a polyalkyleneoxy group, and therefore can exhibit high emulsifying action and dispersion stability of the resin particles.

These actions can improve the dischargeability from the inkjet head.

Furthermore, since the resin dispersion further contains the unreacted anionic reactive emulsifier separately from the resin particles, the dispersibility of the resin particles can be further enhanced. It is presumed that this is because a part of the anionic reactive emulsifier to be reacted enters the resin particles and is not exposed on surfaces of the resin particles, and as described above, a portion of the surfaces of the resin particles not covered with the reacted anionic reactive emulsifier can be compensated by the unreacted anionic reactive emulsifier present separately therefrom.

Hereinafter, the configuration of a resin dispersion used in an ink according to an embodiment of the present invention and the configuration of the ink using the resin dispersion will be described in detail.

### 1. Aqueous inkjet ink resin dispersion

An aqueous inkjet ink resin dispersion (hereinafter, referred to as "resin dispersion") according to an embodiment of the present invention is obtained by emulsion polymerization of a monomer composition in a medium containing water, and contains resin particles and water.

### 1-1. Resin particle

### (Polymerizable compound represented by formula (1))

The resin particle contains a radical polymer containing a structural unit derived from a polymerizable compound represented by formula (1).

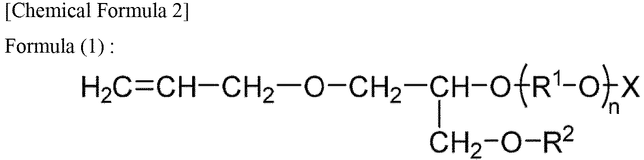

In formula (1), R¹ represents an alkylene group having 1 to 10 carbon atoms. The alkylene group having 1 to 10 carbon atoms is preferably an alkylene group having 2 to 5 carbon atoms, and more preferably an ethylene group or a propylene group. Among these groups, an ethylene group is preferable from a viewpoint of enhancing hydrophilicity of the resin particles and easily enhancing dispersibility.

n represents an integer of 1 to 100. n is preferably an integer of 10 to 60, more preferably 10 to 30, and still more preferably 10 to 15 from a viewpoint of dispersibility and water resistance.

X represents -SO₃M (M represents an alkali metal atom or NH₄). X is preferably -SO₃NH₄.

R² represents an alkyl group having 1 to 50 carbon atoms or an aryl group having 6 to 30 carbon atoms. The alkyl group having 1 to 50 carbon atoms is preferably an alkyl group having 5 to 20 carbon atoms, and more preferably an alkyl group having 10 to 15 carbon atoms. The aryl group having 6 to 30 carbon atoms is preferably a phenyl group. The alkyl group may further have a substituent such as a phenyl group, and the aryl group may further have a substituent such as an alkyl group.

As described above, the resin dispersion is obtained by emulsion polymerization of a monomer composition containing a polymerizable compound represented by formula (1) in a medium containing water. The polymerizable compound represented by formula (1) is an anionic reactive emulsifier having an allyl group as a polymerizable group. Since the anionic reactive emulsifier has an allyl group which is a polymerizable group, the anionic reactive emulsifier is incorporated into a molecular chain of the radical polymer constituting the resin particle and is easily oriented on surfaces of the resin particles. As a result, a polyoxyalkylene group and an anionic group are easily oriented on the surfaces of the resin particles, and even when a high pressure is applied, these groups are hardly removed, and therefore high dispersibility can be maintained.

### Examples of the polymerizable compound represented by formula (1) include ADEKA REASOAP SR-10 and SR-20 (manufactured by ADEKA CORPORATION).

The content of the polymerizable compound represented by formula (1) is preferably 0.5 to 10% by mass with respect to all the structural units constituting the radical polymer. When the content is 0.5% by mass or more, emulsion polymerization is likely to proceed stably, and dispersibility of the resin particles can be sufficiently enhanced. When the content is 10% by mass or less, gelation due to an increase in solution viscosity of the polymer solution is easily sufficiently suppressed. The content of the polymerizable compound represented by formula (1) is more preferably 1 to 5% by mass with respect to all the structural units constituting the radical polymer from a similar viewpoint.

### (Alkyl (meth)acrylate)

The radical polymer constituting the resin particles preferably further contains a structural unit derived from an alkyl (meth)acrylate. The alkyl (meth)acrylate means an alkyl acrylate or an alkyl methacrylate.

In particular, the alkyl (meth)acrylate preferably contains an alkyl acrylate as a main component from a viewpoint of use in an aqueous inkjet ink for textile printing. This is because a polymer of an alkyl acrylate has a lower glass transition temperature (Tg) than a polymer of an alkyl methacrylate and has flexibility, and therefore is less likely to impair a texture of a fabric in inkjet textile printing.

The number of carbon atoms in an alkyl group of the alkyl acrylate is, for example, 1 to 20, preferably 4 to 12, and more preferably 4 to 8. Examples of such an alkyl acrylate include butyl acrylate, pentyl acrylate, hexyl acrylate, heptyl acrylate, and 2-ethylhexyl acrylate, and butyl acrylate is preferable.

The number of carbon atoms in an alkyl group of the alkyl methacrylate is, for example, 1 to 20, preferably 1 to 110, and more preferably 1 to 8. Examples of such an alkyl methacrylate include methyl methacrylate, ethyl methacrylate, and propyl methacrylate, and methyl methacrylate is preferable.

The content of the structural unit derived from the alkyl (meth)acrylate is preferably 60 to 99% by mass, and more preferably 90 to 99% by mass with respect to all the structural units of the radical polymer. In particular, a content ratio between the structural unit derived from the alkyl acrylate and the structural unit derived from the alkyl methacrylate is preferably alkyl acrylate : alkyl methacrylate = 50 : 50 to 90 : 10 (mass ratio), and more preferably 60 : 40 to 80 : 20 (mass ratio).

### (Other monomer)

The radical polymer constituting the resin particles may further contain a structural unit derived from a monomer other than the above monomers. The other monomer is not particularly limited, and examples thereof include a (meth)acrylamide, a hydroxyalkyl (meth)acrylate, and a (meth)acrylate having an aromatic ring.

### (Physical properties)

The glass transition temperature (Tg) of the radical polymer constituting the resin particles is -35°C or lower, and more preferably -35 to -50°C from a viewpoint of use in an aqueous inkjet ink for textile printing although depending on an application. This is because when Tg of the radical polymer constituting the resin particles is low, flexibility is high and a texture of a fabric is less likely to be impaired. Tg of the radical polymer is measured by differential scanning calorimetry at a temperature rising rate of 10°C/min in accordance with JIS K7121.

Tg of the radical polymer constituting the resin particles can be adjusted by a monomer composition of the polymer. For example, when the content of the alkyl acrylate is increased, Tg of the radical polymer is lowered.

The radical polymer constituting the resin particles has a weight average molecular weight of, for example, 500000 or more, preferably 1000000 to 2000000. When the weight average molecular weight is the lower limit value or more, fixability of an image on a fabric and mechanical properties can be improved. The weight average molecular weight can be measured in terms of styrene using a gel permeation chromatograph (GPC).

The average particle size of the resin particles in the resin dispersion is preferably 30 to 200 nm, and more preferably 50 to 120 nm, for example, from a viewpoint of dischargeability by inkjet. The average particle size is an average value of primary particle sizes. The average particle size of the resin particles in the resin dispersion can be measured as, for example, a dispersion particle size (Z average) in a Zataizer Nano S90 manufactured by Melvern Instruments Ltd.

The content of the resin particles is not particularly limited, but is preferably 1 to 50% by mass, more preferably 5 to 40% by mass, and still more preferably 10 to 35% by mass with respect to the resin dispersion.

### 1-2. Other component

The resin dispersion may further contain a component other than the above components. The other component may be, for example, various additives used in preparing the resin particles by an emulsion polymerization method or an unreacted monomer component. Among these components, the resin dispersion preferably further contains an emulsifier (surfactant) from a viewpoint of further enhancing dispersibility of the resin particles.

The type of emulsifier may be anionic, nonionic, amphoteric, or cationic, but an anionic emulsifier is preferable from a viewpoint of dispersibility.

Examples of the anionic emulsifier include a sulfonate such as sodium dodecylbenzenesulfonate, a sulfate, and an anionic reactive emulsifier having a polymerizable group. These emulsifiers may be used singly or in combination of two or more types thereof. Among these emulsifiers, the resin dispersion preferably contains an anionic reactive emulsifier having an allyl group.

The anionic reactive emulsifier having an allyl group is preferably an anionic reactive emulsifier having an allyl ether group. The anionic reactive emulsifier having an allyl ether group is not particularly limited. However, the resin dispersion preferably contains the unreacted anionic reactive emulsifier used for preparing the resin particles, that is, the unreacted polymerizable compound represented by the above formula (1) (released component) from a viewpoint of productivity and affinity with the resin particles.

A mechanism by which dispersibility of the resin particles is further improved by inclusion of the unreacted anionic reactive emulsifier in the resin dispersion is not clear. However, it is considered that this is because a portion of surfaces of the resin particles not covered with the (reacted) anionic reactive emulsifier is covered with the unreacted and released anionic reactive emulsifier having an allyl group.

That is, the content of the unreacted polymerizable compound represented by formula (1) is preferably 5 to 40% by mass, and more preferably 15 to 40% by mass with respect to the total amount of the polymerizable compounds represented by formula (1) contained in the monomer composition (total amount of unreacted polymerizable compound represented by formula (1) and reacted polymerizable compound represented by formula (1)). When the content of the unreacted polymerizable compound represented by formula (1) is the lower limit value or more, dispersibility of the resin particles is more easily enhanced. When the content of the unreacted polymerizable compound represented by formula (1) is the upper limit value or less, a decrease in dispersion stability of the resin particles and a decrease in dischargeability of the ink due to the decrease in dispersion stability are more easily suppressed.

In the resin dispersion, the content of the unreacted polymerizable compound represented by formula (1) (released component) can be measured by the following method.

The resin dispersion is heated to 80°C, and a 10% MgCl₂ aqueous solution is added thereto to precipitate the resin particles. Meanwhile, a calibration curve of the polymerizable compound represented by formula (1) is created by HPLC. The supernatant is measured by HPLC, and the obtained data is collated with the data of the calibration curve to specify the amount of the released polymerizable compound represented by formula (1).

### 1-3. Manufacturing method

As described above, the resin dispersion according to an embodiment of the present invention can be prepared by emulsion polymerization of a monomer composition containing a polymerizable compound represented by formula (1) as an anionic reactive emulsifier. That is, by mixing the above-described components to perform polymerization by an emulsion polymerization method, and then performing a filtration treatment, a resin dispersion in which resin particles are dispersed in an aqueous medium can be obtained.

The emulsion polymerization method is a method in which resin particles are prepared by polymerizing an emulsion prepared by adding a monomer, a polymerization initiator, an emulsifier, and as necessary, a chain transfer agent and the like into an aqueous medium (for example, water). In the emulsion polymerization method, the reactive emulsifier described above functions as an emulsifier while being a monomer. Therefore, when the resin particles are prepared, an emulsifier other than the anionic reactive emulsifier does not have to be added. Note that a known emulsifier may be separately added as long as dischargeability or aggregatability is not decreased.

The type of the polymerization initiator is not particularly limited, and an inorganic persulfate (for example, potassium persulfate, sodium persulfate, or ammonium persulfate), an azo-based initiator (for example, 2,2'-azobis (2-amidinopropane) dihydrochloride, 2,2'-azobis [2-methyl-N-(2-hydroxyethyl)-propionamide], or 4,4'-azobis (4-cyanovaleric acid)), an organic peroxide (for example, t-butyl peroxypivalate or t-butyl hydroperoxide), or salts thereof can be used. Among these polymerization initiators, an azo-based initiator and an organic peroxide are preferably used.

The blending amount of the polymerization initiator is usually 0.01 to 5 parts by mass, and preferably 0.2 to 2 parts by mass with respect to 100 parts by mass of all the monomers.

### 2. Aqueous inkjet ink

The aqueous inkjet ink according to an embodiment of the present invention contains a coloring material, resin particles, and an aqueous medium.

### 2-1. Coloring material

The coloring material is a disperse dye or a pigment. The disperse dye is a dye insoluble or poorly soluble in water. Being insoluble or poorly soluble in water means that solubility in water at 25°C is 10 mg/L or less, preferably 5 mg/L or less, and more preferably 1 mg/L or less. In particular, a pigment is preferable from a viewpoint of favorable light resistance and the like.

The pigment is not particularly limited, but may be, for example, an organic pigment or an inorganic pigment of the following number described in Color Index.

Examples of an orange or yellow pigment include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 17, C. I. Pigment Yellow 74, C. I. Pigment Yellow 83, C. I. Pigment Yellow 93, C. I. Pigment Yellow 94, C. I. Pigment Yellow 128, C. I. Pigment Yellow 138, C. I. Pigment Yellow 151, C. I. Pigment Yellow 154, C. I. Pigment Yellow 155, C. I. Pigment Yellow 180, C. I. Pigment Yellow 185, and C. I. Pigment Yellow 213.

Examples of a red or magenta pigment include Pigment Red 3, 5, 19, 22, 31, 38, 43, 48: 1, 48: 2, 48: 3, 48: 4, 48: 5, 49: 1, 53: 1,57: 1, 57: 2, 58: 4, 63: 1, 81, 81: 1, 81: 2, 81: 3, 81: 4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Examples of a blue or cyan pigment include Pigment Blue 1,15,15: 1, 15: 2, 15: 3, 15: 4, 15: 6, 16, 17-1, 22, 27, 28, 29, 36, and 60.

Examples of a green pigment include Pigment Green 7, 26, 36, and 50. Examples of a yellow pigment include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193.

Examples of a black pigment include Pigment Black 7, 28, and 26.

The pigment is preferably further dispersed with a pigment dispersant from a viewpoint of improving dispersibility in the ink. The pigment dispersant will be described later.

The pigment may be a self-dispersible pigment. The self-dispersible pigment is obtained by modifying a surface of a pigment particle with a hydrophilic group, and has the pigment particle and the hydrophilic group bonded to a surface of the pigment particle.

Examples of the hydrophilic group include a carboxyl group, a sulfonate group, and a phosphorus-containing group. Examples of the phosphorus-containing group include a phosphate group, a phosphonate group, a phosphinate group, a phosphite group, and a phosphate group.

Examples of a commercially available product of the self-dispersible pigment include Cab-O-Jet (registered trademark) 200K, 250C, 260M, and 270V (sulfonate group-containing self-dispersible pigment), Cab-O-Jet (registered trademark) 300K (carboxylic acid group-containing self-dispersible pigment), and Cab-O-Jet (registered trademark) 400K, 450C, 465M, 470V, and 480V (phosphate group-containing self-dispersible pigment), manufactured by Cabot Corporation.

The content of the coloring material is not particularly limited, but is preferably 0.3 to 10% by mass, and more preferably 0.5 to 3% by mass with respect to the ink from a viewpoint of easily adjusting the viscosity of the ink within the above range and being able to form a high-density image. When the content of the coloring material is the lower limit value or more, the color of an image tends to be vivid. When the content of the coloring material is the upper limit value or less, the viscosity of the ink does not become too high, and ejection stability is less likely to be impaired.

### 2-2. Resin particles

The resin particles are the resin particles of the resin dispersion according to an embodiment of the present invention. The content of the resin particles is preferably 1 to 30% by mass with respect to the ink. When the content of the resin particles is 1% by mass or more, fixability of the ink to a fabric is easily sufficiently enhanced. When the content of the resin particles is 30% by mass or less, a texture is less likely to be impaired. The content of the resin particles is preferably 10 to 25% by mass with respect to the ink from a similar viewpoint.

### 2-3. Aqueous medium

The aqueous medium contains at least water, and preferably further contains a water-soluble organic solvent.

Examples of the water-soluble organic solvent include an alcohol (for example, methanol, ethanol, propanol, pentanol, hexanol, cyclohexanol, or benzyl alcohol), a polyhydric alcohol (for example, ethylene glycol, diethylene glycol, triethylene glycol, polyethylene glycol, propylene glycol, dipropylene glycol, tripropylene glycol, polypropylene glycol, glycerin, or a compound represented by the following formula (A)), a polyhydric alcohol ether (for example, ethylene glycol monomethyl ether, ethylene glycol monoethyl ether, ethylene glycol monobutyl ether, ethylene glycol monophenyl ether, diethylene glycol monomethyl ether, diethylene glycol monoethyl ether, diethylene glycol monobutyl ether, diethylene glycol dimethyl ether, propylene glycol monomethyl ether, or propylene glycol monoethyl ether), an amine (for example, ethanolamine, N-ethyldiethanolamine, morpholine, N-ethylmorpholine, ethylenediamine, diethylenediamine, or triethylenetetramine), an amide (for example, formamide, N,N-dimethylformamide, or N,N-dimethylacetamide), a heterocycle (for example, 2-pyrrolidone, N-methyl-2 pyrrolidone, N-cyclohexyl-2-pyrrolidone, 2-oxazolidone, or 1,3-dimethyl-2-imidazolidine), a sulfoxide (for example, dimethylsulfoxide), and a sulfone (for example, sulfolane). 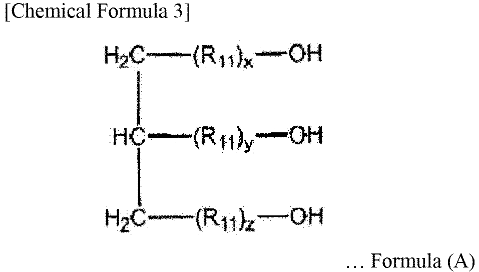 (In formula (A), each of R₁₁s represents an ethylene glycol group or a propylene glycol group, x, y, and z all represent positive integers, and x + y + z = 3 to 30.)

In particular, the ink is preferably less likely to be thickened by drying from a viewpoint of making it easy for the ink to permeate a fabric and from a viewpoint of enhancing dischargeability from an inkjet head. Therefore, the ink preferably contains a high-boiling point solvent having a boiling point of 200°C or higher.

Examples of the high-boiling point solvent having a boiling point of 200°C or higher include a polyol and a polyalkylene oxide each having a boiling point of 200°C or higher. A polyol having a boiling point of 200°C or higher is preferable, and glycerin is more preferable.

The content of the water-soluble organic solvent is not particularly limited, but is preferably 10 to 40% by mass, and more preferably 20 to 35% by mass with respect to the ink from a viewpoint of, for example, dischargeability by an inkjet head.

The content of the aqueous medium is not particularly limited, but is, for example, preferably 50 to 90% by mass, and more preferably 60 to 85% by mass with respect to the ink.

### 2-4. Other component

The ink may further contain another component as necessary. Examples of the other component include a pigment dispersant, a surfactant, an antiseptic, an antifungal agent, and a pH adjuster.

The pigment dispersant is present in the ink so as to surround a surface of the pigment particle, or is adsorbed on the surface of the pigment particle to form a pigment dispersion, thereby dispersing the pigment favorably. The pigment dispersant is preferably a polymer dispersant, and more preferably an anionic polymer dispersant.

The anionic polymer dispersant is a polymer dispersant having a hydrophilic group such as a carboxylic acid group, a phosphorus-containing group, or a sulfonate group, and preferably a polymer dispersant having a carboxylic acid group.

The polymer dispersant having a carboxylic acid group may be a polycarboxylic acid or a salt thereof. Examples of the polycarboxylic acid include a (co)polymer of a monomer selected from the group consisting of acrylic acid or a derivative thereof, maleic acid or a derivative thereof, itaconic acid or a derivative thereof, and fumaric acid or a derivative thereof, and a salt thereof. Examples of the other monomer constituting the copolymer include styrene and vinylnaphthalene.

The anionic group equivalent of the anionic polymer dispersant is preferably, for example, 1.1 to 3.8 meq/g from a viewpoint of sufficiently dispersing the pigment particles. When the anionic group equivalent is within the above range, high pigment dispersibility is easily obtained without increasing the molecular weight of the anionic polymer dispersant. The anionic group equivalent of the anionic polymer dispersant can be determined from an acid value. The acid value can be measured in accordance with JIS K0070.

The weight average molecular weight (Mw) of the polymer dispersant is not particularly limited, but is preferably 5000 to 30000. When Mw of the polymer dispersant is 5000 or more, the pigment particles are easily sufficiently dispersed. When Mw of the polymer dispersant is 30000 or less, the ink is not excessively thickened, and therefore permeation into a fabric is less likely to be impaired. Mw of the polymer dispersant can be measured by a method similar to that described above.

The content of the polymer dispersant is not particularly limited as long as the polymer dispersant sufficiently disperses the pigment particles and has a viscosity that does not impair permeability into a fabric, but is preferably 20 to 100% by mass, and more preferably 25 to 60% by mass with respect to the pigment.

The ink may further contain a surfactant as necessary. The surfactant may reduce surface tension of the ink to increase wettability to a fabric. The type of surfactant is not particularly limited, but may be, for example, an acetylene glycol-based surfactant, a silicone-based surfactant, or a fluorine-based surfactant.

Examples of the antiseptic or the antifungal agent include an aromatic halogen compound (for example, Preventol CMK), methylene dithiocyanate, a halogen-containing nitrogen sulfur compound, and 1,2-benzisothiazolin-3-one (for example, PROXEL GXL).

Examples of the pH adjuster include citric acid, sodium citrate, hydrochloric acid, and sodium hydroxide.

### 2-5. Physical properties

The viscosity of the ink at 25°C is not particularly limited as long as an ejection property by an inkjet method is favorable, but is preferably 3 to 20 mPa•s, and more preferably 4 to 12 mPa•s. The viscosity of the ink can be measured by an E-type viscometer at 25°C.

### 2-6. Preparation of ink

The ink according to an embodiment of the present invention can be manufactured by any method. For example, the ink according to an embodiment of the present invention can be manufactured through 1) a step of mixing a pigment, a pigment dispersant, and a solvent (water or the like) to obtain a pigment dispersion liquid, and 2) a step of further mixing the obtained pigment dispersion liquid, the resin dispersion according to an embodiment of the present invention, an aqueous medium, and the like.

### 3. Image forming method

An image forming method according to an embodiment of the present invention includes a step of applying droplets of the ink according to an embodiment of the present invention onto a fabric by an inkjet method.

Specifically, the image forming method according to an embodiment of the present invention includes: 1) a step of discharging the ink from an inkjet recording head to apply droplets of the ink onto a fabric (ink applying step); and 2) a step of drying and fixing the ink applied to the fabric (drying and fixing step).

### Regarding step 1) (ink applying step)

The ink is discharged from an inkjet recording head to apply droplets of the ink onto a fabric.

The type of a fiber material constituting the fabric is not particularly limited, and the fabric preferably contains a natural fiber such as cotton (cellulose fiber), hemp, wool, or silk, or a chemical fiber such as rayon, vinylon, nylon, acrylic, polyurethane, polyester, or acetate. The fabric may be obtained by forming these fibers into any form such as a woven fabric, a nonwoven fabric, or a knitted fabric. The fabric may be a blended woven fabric or a blended nonwoven fabric of two or more types of fibers.

For example, in a case where the ink contains an anionic dispersant, the fabric preferably has a cationic group or an acid group at least on a surface thereof from a viewpoint of enhancing an adsorption rate and fixability of a pigment. The fabric having a cationic group or an acid group at least on a surface thereof may be a pretreated fabric or a non-pretreated fabric.

### Regarding step 2) (drying and fixing step)

In the drying step, the ink applied to the fabric is dried to remove a solvent component in the ink. The pigment is thereby fixed to the fabric.

A drying method is not particularly limited, and may be a method using a heater, a hot air dryer, a heat roller, or the like. In particular, it is preferable to heat and dry both surfaces of the fabric using a hot air dryer and a heater.

A drying temperature only needs to be set so as to evaporate a solvent component in the ink. Specifically, the drying temperature is preferably a temperature at which the solvent component evaporates or higher and (Tg + 170)°C (Tg means Tg of resin particles) or lower. The drying temperature may be room temperature.

In the present invention, since Tg of the resin particles applied to the fabric is low, even when the resin particles are fused to each other at the time of drying the ink, it is difficult to form a hard coating film. The texture of the fabric is thereby less likely to be impaired.

The image forming method according to an embodiment of the present invention may further include 3) a step of pretreating a fabric (pretreatment step) as necessary.

### Regarding step 3) (pretreatment step)

In the pretreatment step, a pretreatment agent is applied to a fabric. The type of pretreatment agent is not particularly limited, and can be selected according to the composition of the ink. For example, in a case where the ink contains an anionic polymer dispersant, the pretreatment agent preferably contains a compound having an acid group or a cationic group.

The compound having an anionic group is not particularly limited, and may be similar to an anionic surfactant, or may be a polymer compound having an anionic group or the like. Examples of the polymer compound having an anionic group include a plant skin such as pectinic acid, a cellulose derivative such as carboxymethyl cellulose, a processed starch such as a carboxymethyl starch or a carboxyethyl starch, and a synthetic starch such as an acrylic polymer containing acrylic acid as a copolymerization component, such as an acrylic acid/acrylate copolymer or a styrene-acrylic acid copolymer.

A method for applying the pretreatment agent is not particularly limited, and may be, for example, a pad method, a coating method, a spray method, or an inkjet method. The pretreatment agent applied to the fabric can also be heated and dried using hot air, a hot plate, or a heat roller.

### [Examples]

Hereinafter, the present invention will be described with reference to Examples. The glass transition temperature ( T_{g}) of the resin dispersions No. 1 and No. 11 as indicated in Table 1 below is not according to the present claims. The scope of the present invention is not construed as being limited by Examples.

### 1. Preparation of resin dispersion

### <Monomer>

- Alkyl (meth)acrylate
   Methyl methacrylate (MMA)
   Butyl acrylate (BA)
- Polymerizable compound represented by formula (1)
   ADEKA REASOAP SR-10 (n = 10, X = -SO₃NH₄, R¹ = ethylene group, R² = alkyl group having 6 to 10 carbon atoms) manufactured by ADEKA CORPORATION
   ADEKA REASOAP SR-20 (n = 20, X = -SO₃NH₄, R¹ = ethylene group, R² = alkyl group having 6 to 10 carbon atoms) manufactured by ADEKA CORPORATION
- Other monomer
   2-Methyl adamantyl acrylate (MADA)
   JS-20 (anionic reactive emulsifier represented by the following formula) 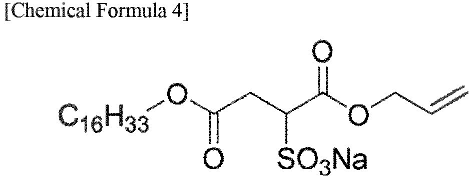
   NE-10 (nonionic reactive emulsifier represented by the following formula) 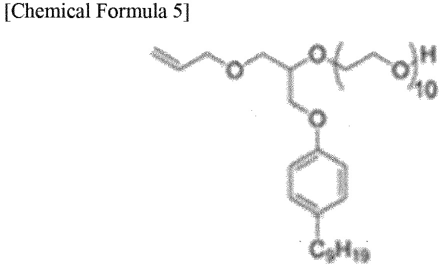
   Diethylene glycol monomethacrylate (DEGMA)

### <Preparation of resin dispersion 1>

Into a separable flask equipped with a stirrer, a temperature sensor, a cooling tube, and a nitrogen introduction apparatus, an activator solution in which 2.52 g of an anionic activator (sodium dodecylbenzene sulfonate: SDS) and 0.58 g of sodium carbonate were dissolved in 553 g of deionized water in advance was put, and an internal temperature thereof was raised to 80°C while the activator solution was stirred at a stirring rate of 330 rpm under a nitrogen stream.

Meanwhile, 162 g of n-butyl acrylate (BA), 66 g of methyl methacrylate (MMA), and 12 g of SR-10 manufactured by ADEKA CORPORATION were dissolved in the activator solution to prepare a monomer solution.

Next, a solution in which 0.07 g of a polymerization initiator (potassium persulfate: KPS) was dissolved in 2.66 g of deionized water was prepared and heated at 80°C. The monomer solution prepared above was added dropwise to this solution over 60 minutes, and the resulting mixture was stirred to prepare a dispersion of resin particles.

Furthermore, after completion of the dropwise addition, the resulting mixture was heated and stirred for 120 minutes. Thereafter, a solution in which 0.07 g of a polymerization initiator (potassium persulfate: KPS) was dissolved in 2.66 g of deionized water was further added thereto, and the resulting mixture was stirred for 60 minutes and then cooled to 40°C to obtain a dispersion 1 of resin particles.

### <Preparation of resin dispersions 2 and 3>

Dispersions 2 and 3 of resin particles were obtained in a similar manner to the dispersion 1 of resin particles except that the blending amounts were changed such that the content of SR-10 manufactured by ADEKA CORPORATION was each of the ratios presented in Table 1.

### <Preparation of resin dispersion 4>

A dispersion 4 of resin particles was obtained in a similar manner to the resin dispersion 1 except that SR -10 manufactured by ADEKA CORPORATION was changed to SR-20 manufactured by ADEKA CORPORATION.

### <Preparation of resin dispersion 5>

A resin dispersion 5 was obtained in a similar manner to the resin dispersion 1 except that the mass ratio between n-butyl acrylate (BA) and methyl methacrylate (MMA) was changed as presented in Table 1 without blending SR-10 manufactured by ADEKA CORPORATION in the composition of the monomer solution.

### <Preparation of resin dispersion 6>

Into a separable flask equipped with a stirrer, a temperature sensor, a cooling tube, and a nitrogen introduction apparatus, an activator solution in which 2.52 g of an anionic activator (sodium dodecylbenzene sulfonate: SDS) and 0.58 g of sodium carbonate were dissolved in 553 g of deionized water in advance was put, and an internal temperature thereof was raised to 80°C while the activator solution was stirred at a stirring rate of 330 rpm under a nitrogen stream.

Meanwhile, 162 g of n-butyl acrylate (BA) and 66 g of methyl methacrylate (MMA) were dissolved in the activator solution to prepare a monomer solution.

Next, a solution in which 0.7 g of a polymerization initiator (potassium persulfate: KPS) was dissolved in 26.6 g of deionized water was prepared and heated at 80°C. The monomer solution prepared above was added dropwise to this solution over 60 minutes, and the resulting mixture was stirred to prepare resin particles.

Furthermore, after completion of the dropwise addition, the mixture was heated and stirred for 120 minutes. Thereafter, a solution in which 0.7 g of a polymerization initiator (potassium persulfate: KPS) was dissolved in 26.6 g of deionized water was further added thereto, and the resulting mixture was stirred for 60 minutes and then cooled to 40°C. To the resulting solution, 12 g of SR-10 manufactured by ADEKA CORPORATION was added and mixed to obtain a dispersion of resin particles.

### <Preparation of resin dispersions 7 to 13>

Resin dispersions 7 to 13 were obtained in a similar manner to the resin dispersion 1 except that the compositions of the monomer solutions were changed so as to have the amount ratios presented in Table 1.

### <Evaluation>

Tg (Tg of the radical polymer) and the average particle size of the obtained resin dispersion were measured by the following methods.

### (Tg)

The resin particles were collected, and the dried sample was measured by differential scanning calorimetry to determine the glass transition temperature. The glass transition temperature was measured under similar conditions to those described above.

### (Average particle size)

The dispersion particle size (Z average) of the resin particles in the resin dispersion was measured by a Zataizer Nano S90 manufactured by Melvern Instruments Ltd.

### The compositions and physical properties of the resin dispersions 1 to 13 are presented in Table 1.

Note that the amount of the unreacted polymerizable compound represented by formula (1) in the resin dispersion was measured by the following method. That is, the resin dispersion was heated to 80°C, and a 10% MgCl₂ aqueous solution was added thereto to precipitate the resin particles. Meanwhile, a calibration curve of the polymerizable compound represented by formula (1) was prepared by HPLC. The supernatant was measured by HPLC, and the obtained data was collated with the data of the calibration curve to measure the amount of the released polymerizable compound represented by formula (1).

**[Table 1]**

| Resin dispersion No. | Alkyl (meth)acrylate (% by mass) | | Polymerizable compound represented by formula (1) (% by mass) | | Other monomer (% by mass) | | | | Tg (°C) | Average particle size (nm) | Content of unreacted polymerizable compound* (% by mass) | Note |
|---|---|---|---|---|---|---|---|---|---|---|---|---|
| | MMA | BA | SR-10 | SR-20 | MADA | JS-20 | NE10 | DEGMA | | | | |
| 1 | 27.5 | 70 | 2.5 | | | | | | 36 | 80 | 30 | Example |
| 2 | 29 | 70 | 1 | | | | | | -38 | 77 | | Example |
| 3 | 20 | 70 | 10 | | | | | | -45 | 85 | | Example |
| 4 | 27.5 | 70 | | 2.5 | | | | | -37 | 82 | | Example |
| 5 | 30 | 70 | | | | | | | -30 | 81 | 0 | Comparative Example |
| 6 | 27.5 | 70 | 2.5 | | | | | | -40 | 78 | 100 | Comparative Example |
| 7 | 27.5 | 70 | | | 2.5 | | | | -40 | 81 | 10 | Comparative Example |
| 8 | 27.5 | 70 | | | | 2.5 | | | -37 | 83 | | Comparative Example |
| 9 | 27.5 | 70 | | | | | 2.5 | | -39 | 80 | | Comparative Example |
| 10 | 27.5 | 70 | | | | | | 2.5 | -37 | 82 | | Comparative Example |
| 11 | 70 | 27.5 | 2.5 | | | | | | 22 | 85 | 25 | Example |
| 12 | 27.5 | 70 | 2.5 | | | | | | -36 | 76 | 10 | Example |
| 13 | 27.5 | 70 | 2.5 | | | | | | -35 | 77 | 0 | Example |

| | | | | | | | | | | | | |
|---|---|---|---|---|---|---|---|---|---|---|---|---|
| *Ratio of amount of unreacted polymerizable compound represented by formula (1) with respect to total amount (charge amount) of polymerizable compound represented by formula (1) | | | | | | | | | | | | |

### 2. Preparation and evaluation of ink

### <Preparation of pigment dispersion liquid>

With 7 parts by mass of a styrene/butyl acrylate/methacrylic acid copolymer (anionic dispersant, weight average molecular weight 16000, anionic group equivalent 3.5 meq/g) as a pigment dispersant, 78 parts by mass of water was mixed, and then the resulting mixture was heated and stirred to prepare a neutralized product of the pigment dispersant. To this mixed liquid, 15 parts by mass of C. I. Pigment Blue 15: 3 was added, and the resulting mixture was premixed. Thereafter, C. I. Pigment Blue 15: 3 was dispersed using a sand grinder filled with 0.5 mm zirconia beads at 50% by volume to obtain a cyan pigment dispersion liquid having a pigment concentration of 15% by mass.

### <Preparation of Ink 1>

Next, the following components were mixed to make the total amount 100 parts by mass, thereby obtaining an ink 1.
Pigment dispersion liquid prepared above (pigment concentration: 15 parts by mass): 10 parts by mass (solid content concentration: 1.5 parts by mass)
Resin dispersion 1 prepared above (solid content concentration: 30% by mass): 41 parts by mass (solid content concentration: 12.3 parts by mass)
Ethylene glycol: 10 parts by mass
Propylene glycol: 10 parts by mass
Glycerin: 10 parts by mass
OLFIN E1010 (acetylene glycol-based surfactant manufactured by Nissin Chemical Industry Co., Ltd.): 0.10 parts by mass
Proxel GXL (manufactured by Lonza Japan): 0.10 parts by mass
Deionized water: balance

### <Preparation of inks 2 to 13>

Inks 2 to 13 were prepared in a similar manner to the ink 1 except that the resin dispersions presented in Table 2 were used.

### <Evaluation>

Filterability, dischargeability, and storage stability of each of the obtained inks 1 to 13 were evaluated.

### (1) Filterability

Using a 1 µm filter (manufactured by Advantec), each of the inks was subjected to pressure filtration at a constant pressure of 0.08 MPa. The mass of a filtrate that had passed through the filter was measured until there was no change in the mass of the filtrate (until filtration became impossible). This mass of the filtrate was applied to the following evaluation criteria, and filterability of the resin dispersion was evaluated.

For 230 g of the filtrate,
A: the mass of the filtrate is 200 g or more
B: the mass of the filtrate is 130 g or more and less than 200 g
C: the mass of the filtrate is 80 g or more and less than 130 g
D: the mass of the filtrate is less than 80 g

### (2) Dischargeability

The magenta ink prepared above was discharged by a line method using a fixed KM1024iMHE manufactured by KONICA MINOLTA, INC. under a discharge condition of a droplet ejection amount of 13 pL. It was confirmed that the filled ink was discharged from all 60 nozzles at start of discharge, and then the ink was continuously discharged for 60 minutes as it was. Then, the number of nozzles that could had been discharged to an end (the number of discharge nozzles after completion of the continuous discharge for 60 minutes) was counted after completion of the continuous discharge for 60 minutes. Dischargeability of the ink was evaluated by applying the number of discharge nozzles after the end of the continuous ejection for 60 minutes to the following evaluation criteria.
A: The number of discharge nozzles after completion of continuous ejection for 60 minutes is 60 or more.
B: The number of discharge nozzles after completion of continuous ejection for 60 minutes is 57 to 59.
C: The number of discharge nozzles after completion of continuous ejection for 60 minutes is 54 to 56.
D: The number of discharge nozzles after completion of continuous ejection for 60 minutes is 53 or less.

### (3) Storage stability

The prepared magenta ink was put in a polyethylene terephthalate container. The polyethylene terephthalate container was hermetically sealed and stored in a thermostatic bath at 50°C for 14 days. Viscosity and spectral absorption after storage were measured, and storage stability was evaluated based on change ratios of the viscosity and spectral absorption after storage with respect to the viscosity and spectral absorption before storage, respectively. The viscosity was measured with an R100 viscometer (manufactured by Toki Sangyo Co., Ltd.) under conditions of 25°C and a cone rotation speed of 20 to 100 rpm. The spectral absorption was measured using V-570 (manufactured by JASCO Corporation) as an apparatus and a quartz cell. Specifically, the ink was diluted 1500 times with ultrapure water, and a change in absorbance at 600 nm was compared using ultrapure water as a control.

The change ratios of the viscosity and spectral absorption were calculated by the following formula, and the storage stability was evaluated based on the following evaluation criteria. Change ratio (%) = 100 × {absolute value of [[(measured value after storage) - (measured value before storage)]}/(measured value before storage)
A: Change ratios of both viscosity and spectral absorption are less than 10%
B: Change ratio of either viscosity or spectral absorption is 10% or more
C: Change ratios of both viscosity and spectral absorption are 10% or more

Evaluation results are presented in Table 2.

**[Table 2]**

| Ink No. | Resin dispersion No. | Alkyl (meth)acrylate (% by mass) | | Polymerizable compound represented by formula (1) (% by mass) | | Other monomer (% by mass) | | | | Content of unreacted polymerizable compound* (% by mass) | Content of resin particles (% by mass) | Evaluation | | | Note |
|---|---|---|---|---|---|---|---|---|---|---|---|---|---|---|---|
| | | MMA | BA | SR-10 | SR-20 | MADA | JS-20 | NE-10 | DEGMA | | | Filterability | Dischargeability | Storage stability | |
| 1 | 1 | 27.5 | 70 | 2.5 | | | | | | 30 | 12.3 | A | A | A | Example |
| 2 | 2 | 29 | 70 | 1 | | | | | | | | A | B | B | Example |
| 3 | 3 | 20 | 70 | 10 | | | | | | | | B | A | A | Example |
| 4 | 4 | 27.5 | 70 | | 2.5 | | | | | | | A | A | A | Example |
| 5 | 5 | 30 | 70 | | | | | | | 0 | | A | D | B | Comparative Example |
| 6 | 6 | 27.5 | 70 | 2.5 | | | | | | 100 | | A | D | A | Comparative Example |
| 7 | 7 | 27.5 | 70 | | | 2.5 | | | | 10 | | A | C | A | Comparative Example |
| 8 | 8 | 27.5 | 70 | | | | 2.5 | | | | | A | D | A | Comparative Example |
| 9 | 9 | 27.5 | 70 | | | | | 2.5 | | | | A | C | A | Comparative Example |
| 10 | 10 | 27.5 | 70 | | | | | | 2.5 | | | A | D | B | Comparative Example |
| 11 | 11 | 70 | 27.5 | 2.5 | | | | | | 25 | | A | A | A | Example |
| 12 | 12 | 27.5 | 70 | 2.5 | | | | | | 10 | | A | A | A | Example |
| 13 | 13 | 27.5 | 70 | 2.5 | | | | | | 0 | | A | B | A | Example |

| | | | | | | | | | | | | | | | |
|---|---|---|---|---|---|---|---|---|---|---|---|---|---|---|---|
| *Ratio of amount of unreacted polymerizable compound represented by formula (1) with respect to total amount (charge amount) of polymerizable compound represented by formula (1) | | | | | | | | | | | | | | | |

As presented in Table 2, the inks 1 to 4 using the resin dispersions 1 to 4 in each of which the polymer constituting the resin particles contains a structural unit derived from the polymerizable compound represented by formula (1) exhibited favorable results in all of filterability, dischargeability, and storage stability.

On the other hand, it can be seen that the inks 5 and 7 to 9 using the resin dispersions 5 and 7 to 9 in each of which the polymer constituting the resin particles does not contain a structural unit derived from the polymerizable compound represented by formula (1) have low dischargeability.

In particular, in the resin dispersion 7, the polymer constituting the resin particles does not have an allyl group, a repeating unit of an oxyalkylene group, or an anionic group, in the resin dispersion 8, the polymer constituting the resin particles does not have a repeating unit of an oxyalkylene group, and in the resin dispersion 9, the polymer constituting the resin particles does not have an anionic group. Therefore, it is presumed that a dispersibility improving effect could not be obtained, and dischargeability from the inkjet head to which a high pressure was applied was not improved. In addition, in the resin dispersion 6, since the polymerizable compound represented by formula (1) was not reacted but added in an unreacted state, the polymer constituting the resin particles did not have a structural unit derived from the polymerizable compound represented by formula (1), and a sufficient dispersibility improving effect could not be obtained.

### 3. Image formation

First, an inkjet head (Konica Minolta head #204) was prepared as an image forming apparatus. Next, the obtained ink 11 or 12 was set in the image forming apparatus. Then, a solid image was formed on the fabric using the ink at 540 dpi in main scanning × 720 dpi in sub scanning. Note that the dpi represents the number of ink droplets (dots) per 2.54 cm. A discharge frequency was 22.4 kHz. Thereafter, the fabric to which the ink had been applied was dried at 120°C for five minutes with a belt conveyance type drier to obtain an image-formed product.

The obtained image-formed product and the texture of the fabric were touched with a finger, and sensory evaluation was performed thereon. It was confirmed that both the inks 11 and 12 maintained the original softness of the fabric. In particular, it was confirmed that the original softness of the fabric was maintained at a higher level and the texture was more favorable in use of the ink 12 than those in use of the ink 11.

According to an embodiment of the present invention, an aqueous inkjet ink resin dispersion and an aqueous inkjet ink excellent in dischargeability by inkjet can be provided.

Although embodiments of the present invention have been described and illustrated in detail, the disclosed embodiments are made for purposes of illustration and example only and not limitation. The scope of the present invention should be interpreted by terms of the appended claims.

## Claims

1. An aqueous inkjet ink resin dispersion foi inkjet textile printing comprising resin particles and water, wherein
the resin particles contain a radical polymer containing a structural unit derived from a polymerizable compound represented by formula (1). 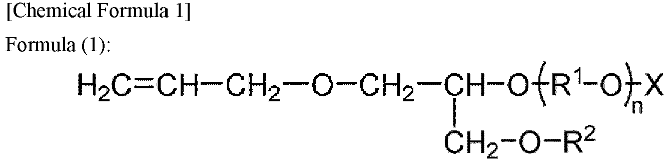 (In formula (1), R¹ represents an alkylene group having 1 to 10 carbon atoms,
n represents an integer of 1 to 100,
R² represents an alkyl group having 1 to 50 carbon atoms or an aryl group having 6 to 30 carbon atoms, and
X represents -SO₃M (M represents an alkali metal atom or NH₄)), wherein
the radical polymer has a glass transition temperature of -35°C or lower, measured by differential scanning calorimetry at a temperature rising rate of 10°C/min according to JIS K7121.

2. The aqueous inkjet ink resin dispersion according to claim 1, wherein
R¹ is an ethylene group.

3. The aqueous inkjet ink resin dispersion according to claim 1 or 2, wherein
a content of the structural unit derived from the polymerizable compound represented by formula (1) is 1 to 10% by mass with respect to all structural units constituting the radical polymer.

4. The aqueous inkjet ink resin dispersion according to any one of claims 1 to 3, wherein
the radical polymer further contains a structural unit derived from an alkyl (meth)acrylate.

5. The aqueous inkjet ink resin dispersion according to any one of claims 1 to 4, further comprising an anionic reactive emulsifier having an allyl group.

6. The aqueous inkjet ink resin dispersion according to claim 5, wherein
the anionic reactive emulsifier having an allyl group contains the unreacted polymerizable compound represented by formula (1).

7. The aqueous inkjet ink resin dispersion according to claim 6, wherein
the aqueous inkjet ink resin dispersion is obtained by emulsion polymerization of a monomer composition containing the polymerizable compound represented by formula (1) in a medium containing the water, and
a content of the unreacted polymerizable compound represented by formula (1) is 5 to 40% by mass with respect to a total amount of the polymerizable compounds represented by formula (1) contained in the monomer composition.

8. An aqueous inkjet ink foi inkjet textile printing comprising a coloring material, resin particles, and an aqueous medium
wherein
the resin particles contain a radical polymer containing a structural unit derived from a polymerizable monomer represented by formula (1). 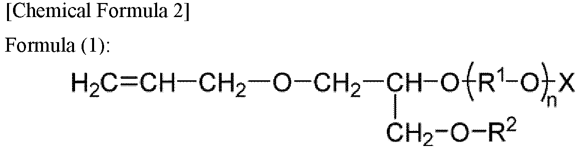 (In formula (1), R¹ represents an alkylene group having 1 to 10 carbon atoms,
n represents an integer of 1 to 100,
R² represents an alkyl group having 1 to 50 carbon atoms or an aryl group having 6 to 30 carbon atoms, and
X represents -SO₃M (M represents an alkali metal atom or NH₄)), wherein
the radical polymer has a glass transition temperature of -35°C or lower, measured by differential scanning calorimetry at a temperature rising rate of 10°C/min according to JIS K7121.

9. The aqueous inkjet ink according to claim 8, wherein
R¹ is an ethylene group.

10. The aqueous inkjet ink according to claim 8 or 9, wherein
a content of the structural unit derived from the polymerizable compound represented by formula (1) is 1 to 10% by mass with respect to all structural units constituting the radical polymer.

11. The aqueous inkjet ink according to any one of claims 8 to 10, wherein
the radical polymer further contains a structural unit derived from an alkyl (meth)acrylate.

12. The aqueous inkjet ink according to any one of claims 8 to 11, further comprising an anionic reactive emulsifier having an allyl group.

13. The aqueous inkjet ink according to claim 12, wherein
the anionic reactive emulsifier having an allyl group contains the unreacted polymerizable compound represented by formula (1).

14. A use of the aqueous inkjet ink according to any one of claims 8 to 13, for inkjet textile printing.

15. The aqueous inkjet ink according to any one of claims 8 to 14, wherein
a content of the resin particles is 1 to 20% by mass with respect to the aqueous inkjet ink.

## Patentansprüche

1. Wässrige Tintenstrahltintenharzdispersion für den Tintentrahltextildruck, die Harzpartikel und Wasser umfasst, wobei
die Harzpartikel ein radikalisches Polymer enthalten, das eine Struktureinheit enthält, das von einer polymerisierbaren Verbindung dargestellt durch Formel (1) abgeleitet ist. 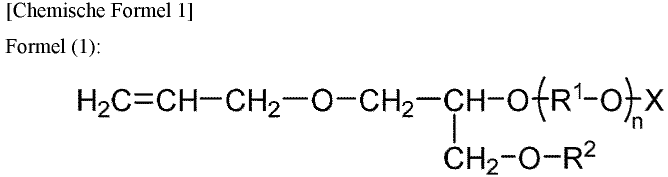 (In Formel (1). R¹ stellt eine Alkylengruppe mit 1 bis 10 Kohlenstoffatomen dar,
n stellt eine ganze Zahl von 1 bis 100 dar,
R² stellt eine Alkylgruppe mit 1 bis 50 Kohlenstoffatomen oder eine Arylgruppe mit 6 bis 30 Kohlenstoffatomen dar, und
X stellt -SO₃M dar (M stellt ein Alkalimetallatom oder NH₄ dar)), wobei
das radikalische Polymer eine Glasübergangstemperatur von -35°C oder niedriger aufweist, gemessen durch Differentialrasterkalorimetrie bei einer Temperaturanstiegsgeschwindigkeit von 10°C/min gemäß JIS K7121.

2. Wässrige Tintenstrahltintenharzdispersion nach Anspruch 1, wobei
R¹ eine Ethylengruppe ist.

3. Wässrige Tintenstrahltintenharzdispersion nach Anspruch 1 oder 2, wobei
ein Gehalt der Struktureinheit, die von der polymerisierbaren Verbindung dargestellt durch Formel (1), abgeleitet ist, 1 bis 10 Massenprozent in Bezug auf alle Struktureinheiten, die das radikalische Polymer bilden, beträgt.

4. Wässrige Tintenstrahltintenharzdispersion nach einem beliebigen der Ansprüche 1 bis 3, wobei
das radikalische Polymer ferner eine von einem Alkyl(meth)acrylat abgeleitete Struktureinheit enthält.

5. Wässrige Tintenstrahltintenharzdispersion nach einem beliebigen der Ansprüche 1 bis 4, ferner umfassend einen anionischen reaktiven Emulgator mit einer Allylgruppe.

6. Wässrige Tintenstrahltintenharzdispersion nach Anspruch 5, wobei
der anionische reaktive Emulgator mit einer Allylgruppe, die nicht umgesetzte polymerisierbare Verbindung dargestellt durch Formel (1), enthält.

7. Wässrige Tintenstrahltintenharzdispersion nach Anspruch 6, wobei
die wässrige Tintenstrahltintenharzdispersion erhalten wird durch Emulsionspolymerisation einer Monomerzusammensetzung enthaltend die polymerisierbare Verbindung dargestellt durch Formel (1) in einem Medium enthaltend das Wasser, und
ein Gehalt der nicht umgesetzten polymerisierbaren Verbindung dargestellt durch Formel (1) 5 bis 40 Massenprozent in Bezug auf die Gesamtmenge der polymerisierbaren Verbindungen dargestellt durch Formel (1) die in der Monomerzusammensetzung enthalten sind, beträgt.

8. Wässrige Tintenstrahltinte für den Tintentextildruck, die ein Färbematerial, Harzpartikel und ein wässriges Medium umfasst, wobei
die Harzpartikel ein radikalisches Polymer enthalten, das eine Struktureinheit enthält, das von einem polymerisierbaren Monomer dargestellt durch Formel (1) abgeleitet ist. 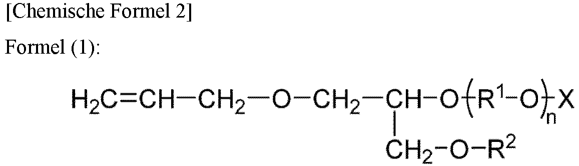 (In Formel (1). R¹ stellt eine Alkylengruppe mit 1 bis 10 Kohlenstoffatomen dar,
n stellt eine ganze Zahl von 1 bis 100 dar,
R² stellt eine Alkylgruppe mit 1 bis 50 Kohlenstoffatomen oder eine Arylgruppe mit 6 bis 30 Kohlenstoffatomen dar, und
X stellt -SO₃M dar (M stellt ein Alkalimetallatom oder NH₄ dar)), wobei
das radikalische Polymer eine Glasübergangstemperatur von -35°C oder niedriger aufweist, gemessen durch Differentialrasterkalorimetrie bei einer Temperaturanstiegsgeschwindigkeit von 10°C/min gemäß JIS K7121.

9. Wässrige Tintenstrahltinte nach Anspruch 8, wobei
R¹ eine Ethylengruppe ist.

10. Wässrige Tintenstrahltinte nach Anspruch 8 or 9, wobei
ein Gehalt der Struktureinheit abgeleitet von der polymerisierbaren Verbindung dargestellt durch Formel (1) 1 bis 10 Massenprozent in Bezug auf alle Struktureinheiten, die das radikalische Polymer bilden, beträgt.

11. Wässrige Tintenstrahltinte nach einem beliebigen der Ansprüche 8 bis 10, wobei
das radikalische Polymer ferner eine von einem Alkyl(meth)acrylat abgeleitete Struktureinheit enthält.

12. Wässrige Tintenstrahltinte nach einem beliebigen der Ansprüche 8 bis 11, ferner umfassend einen anionischen reaktiven Emulgator mit einer Allylgruppe.

13. Wässrige Tintenstrahltinte nach Anspruch 12, wobei der anionische reaktive Emulgator mit einer Allylgruppe, die nicht umgesetzte polymerisierbare Verbindung dargestellt durch Formel (1), enthält.

14. Verwendung der wässrigen Tintenstrahltinte nach einem beliebigen der Ansprüche 8 bis 13 für Tintenstrahltextildruck.

15. Wässrige Tintenstrahltinte nach einem beliebigen der Ansprüche 8 bis 14, wobei
ein Gehalt der Harzpartikel 1 bis 20 Massenprozent, bezogen auf die wässrige Tintenstrahltinte, beträgt.

## Revendications

1. Dispersion aqueuse de résine d'encre pour jet d'encre pour impression textile à jet d'encre comprenant des particules de résine et de l'eau, dans laquelle
les particules de résine contiennent un polymère radicalaire contenant une unité structurelle dérivée d'un composé polymérisable représenté par la formule (1) 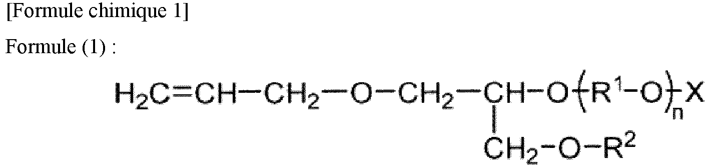 (Dans la formule (1), R¹ représente un groupe alkylène ayant de 1 à 10 atomes de carbone,
n représente un nombre entier de 1 à 100,
R² représente un groupe alkyle ayant de 1 à 50 atomes de carbone ou un groupe aryle ayant de 6 à 30 atomes de carbone, et
X représente -SO₃M (M représente un atome de métal alcalin ou NH₄)), où
le polymère radicalaire a une température de transition vitreuse égale ou inférieure à -35°C, mesurée par calorimétrie différentielle à balayage à une vitesse d'élévation de la température de 10°C/min conformément à JIS K7121.

2. Dispersion aqueuse de résine d'encre pour jet d'encre selon la revendication 1, dans laquelle
R¹ est un groupe éthylène.

3. Dispersion aqueuse de résine d'encre pour jet d'encre selon la revendication 1 ou 2, dans laquelle
une teneur de l'unité structurelle dérivée du composé polymérisable représenté par la formule (1) est de 1 à 10 % en masse par rapport à toutes les unités structurelles constituant le polymère radicalaire.

4. Dispersion aqueuse de résine d'encre pour jet d'encre selon l'une des revendications 1 à 3, dans laquelle
le polymère radicalaire contient en outre une unité structurelle dérivée d'un (méth)acrylate d'alkyle.

5. Dispersion aqueuse de résine d'encre pour jet d'encre selon l'une des revendications 1 à 4, comprenant en outre un émulsifiant réactif anionique ayant un groupe allyle.

6. Dispersion aqueuse de résine d'encre pour jet d'encre selon la revendication 5, dans laquelle
l'émulsifiant réactif anionique ayant un groupe allyle contient le composé polymérisable représenté par la formule (1) n'ayant pas réagi.

7. Dispersion aqueuse de résine d'encre pour jet d'encre selon la revendication 6, dans laquelle
la dispersion aqueuse de résine d'encre pour jet d'encre est obtenue par polymérisation en émulsion d'une composition de monomères contenant le composé polymérisable représenté par la formule (1) dans un milieu contenant de l'eau, et
la teneur en composé polymérisable représenté par la formule (1) n'ayant pas réagi est de 5 à 40 % en masse par rapport à une quantité totale des composés polymérisables représentés par la formule (1) contenus dans la composition de monomères.

8. Encre aqueuse pour jet d'encre pour impression textile à jet d'encre comprenant une matière colorante, des particules de résine et un milieu aqueux, dans laquelle
les particules de résine contiennent un polymère radicalaire contenant une unité structurelle dérivée d'un monomère polymérisable représenté par la formule (1) 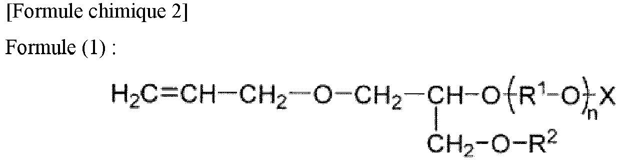 (Dans la formule (1), R¹ représente un groupe alkylène ayant de 1 à 10 atomes de carbone,
n représente un nombre entier de 1 à 100,
R² représente un groupe alkyle ayant de 1 à 50 atomes de carbone ou un groupe aryle ayant de 6 à 30 atomes de carbone, et
X représente -SO₃M (M représente un atome de métal alcalin ou NH₄)), où le polymère radicalaire a une température de transition vitreuse égale ou inférieure à -35°C, mesurée par calorimétrie différentielle à balayage à une vitesse d'élévation de la température de 10°C/min conformément à JIS K7121.

9. Encre aqueuse pour jet d'encre selon la revendication 8, dans laquelle
R' est un groupe éthylène.

10. Encre aqueuse pour jet d'encre selon la revendication 8 ou 9, dans laquelle
une teneur de l'unité structurelle dérivée du composé polymérisable représenté par la formule (1) est de 1 à 10 % en masse par rapport à toutes les unités structurelles constituant le polymère radicalaire.

11. Encre aqueuse pour jet d'encre selon l'une des revendications 8 à 10, dans laquelle
le polymère radicalaire contient en outre une unité structurelle dérivée d'un (méth)acrylate d'alkyle.

12. Encre aqueuse pour jet d'encre selon l'une des revendications 8 à 11, comprenant en outre un émulsifiant réactif anionique ayant un groupe allyle.

13. Encre aqueuse pour jet d'encre selon la revendication 12, dans laquelle
l'émulsifiant réactif anionique ayant un groupe allyle contient le composé polymérisable représenté par la formule (1) n'ayant pas réagi.

14. Utilisation de l'encre aqueuse pour jet d'encre selon l'une des revendications 8 à 13 pour l'impression textile par jet d'encre.

15. Encre aqueuse pour jet d'encre selon l'une des revendications 8 à 14, dans laquelle
une teneur en particules de résine est de 1 à 20 % en masse par rapport à l'encre aqueuse pour jet d'encre.
